Europäisches Patentamt

European Patent Office

Office européen des brevets

(11) Publication number: **0 467 166 A2**

# EUROPEAN PATENT APPLICATION

(21) Application number: **91111169.8**

(22) Date of filing: **05.07.91**

(51) Int. Cl.5: **D21H 27/00, C09D 5/02**

(30) Priority: **16.07.90 JP 188658/90**

(43) Date of publication of application:
**22.01.92 Bulletin 92/04**

(84) Designated Contracting States:
**DE FR GB IT**

(71) Applicant: **OSAKA PRINTING INK MFG. CO., LTD.**
**8-31, Kaminishi 2-chome, Hirano-ku**
**Osaka-shi, Osaka(JP)**

(72) Inventor: **Nobori, Morio**
**4-6-402, Imafukunishi 4-chome, Jyoto-ku**
**Osaka-shi, Osaka(JP)**
Inventor: **Tamura, Takeshi**
**19-24, Kowakae 3-chome**
**Higashiosaka-shi, Osaka(JP)**
Inventor: **Yamaguchi, Seiji**
**8-38, Horyujiminami 1-chome, Ikaruga-cho**
**Ikoma-gun, Nara(JP)**

(74) Representative: **Türk, Gille, Hrabal**
**Brucknerstrasse 20**
**W-4000 Düsseldorf 13(DE)**

(54) Slip resistance overcoat varnish.

(57) Slip-resistance water base overcoat varnish wherein casein solution 0.2% - 18% (solid casein by weight) is mixed in the colloidal silica complex emulsion.

## BACKGROUND OF THE INVENTION

The invention relates to water base overcoat varnish (called OP Varnish hereafter) for preventing paper packages, corrugated cardboards from slipping. The invention contributes to prevent paper packages and corrugated carton boxes piled up from slipping down, giving them slip resistance capacity by coating of OP varnish.

Recently rationalization of goods distribution has remarkably developed. Especially a movement to a fully automation and robotization can be seen in the shipping process for finished products. Since Japan is a small country and the land cost is extremely high in price, boxes are often piled up as high as possible by fork lifts or are often brought up at a steep angle by belt conveyors in order to utilize a space effectively. Under the circumstances, crumbling down of piles of paper packages and corrugated carton boxes caused by slip of their surface has become a serious problem.

There are two conventional articles to prevent piled boxes from slipping down. One is what an tacky material is used, and the other is what a foaming material is used. Followings are made from the tacky materials.

1. A mixed solution of a specific emulsion with tackiness and non-tacky type resin, which is published by Japan Patent Publication No. 63-52065.

2. An article comprising an tacky emulsion and an extender dispersion, which is published by Japan Patent Disclosure No. 61-186597.

There is emulsion of ethylene vinylacetate copolymer and the like, as the specific emulsion with tackiness. There are stylene maleic acid copolymer, stylene acryl copolymer, rosin maleic acid resin, acryl resin, maleic acid resin and the like, as the non-tacky resin.

Slip resistance varnishes inclusive of the tacky material are inferior in heat resistance and blocking resistance. While slip resistance varnishes inclusive of the tacky emulsion and extender dispersion material have disadvantages that its coated surface is not glossy and that remarkable deterioration of slip resistance is caused by separation of extender particles, when its coated surface is repeatedly rubbed. The slip resistance varnish inclusive of a foaming material published by Japan Patent Disclosure No. 1-228834 needs a heat of 120 °C for 5 seconds to foam the foaming particles, which has a disadvantage that its process makes its coated surface glossless.

The invention has been made to solve the problems on conventional slip resistance methods, and to develop and to offer a newly effective slip resistance overcoat varnish.

Generally corrugated carton boxes are not so often required gloss compared with coated paper because of the rough surface. Paper packages printed have glassy gloss on the printed surface because printing ink used for the paper packages is oil base ink which dries up by oxidation polymerization on the smooth coated paper. OP Varnish to be used for this purpose, excepting special mat varnish, is required gloss.

Therefore as mentioned above, the purpose of OP Varnish is to keep gloss and to improve the rub-resistance of paper packages. The conventional OP Varnish includes micro power wax or wax emulsion to improve the rub-resistance. The wax added in the OP Varnish makes the paper packages more slippery.

The friction angle of ordinary OP Varnish for paper packages is about 20 degrees, which is enough for packaging light products. Recently more and more paper packages printed have been used for packaging relatively heavy products and outer boxes, as packaging has been made more and more beautiful.

Possible accident that these packages containing finished products crumble down on the way of piling work and transportation is same as corrugated carton boxes.

There is no specific difinition of slip resistance in numeral value, but it is thought from actual working condition that friction angle of the materials coated with slip resistance varnish is required 30-60 degrees.

Workability of coating methods of slip resistance varnish is a key point. The current coating of OP Varnish are made by flexographic printing (same are made by gravure printing) for corrugated cardboards, and three-roll coater and flexographic coater for paper packages. A new OP Varnish is also required to be done by these methods.

The inventors of the invention have completed water base slip resistance varnish with high-gloss, heat-resistance, blocking-resistance, aiming at offering water base slip resistance varnish which can be coated paper packages, corrugated cardboards, kraft paper by the conventional methods, without the use of tackiness resin that hinders heat-resistance and blocking-resistance, nd without the use of micro powder of silica and extenders that lower a value in gloss.

## SUMMARY OF THE INVENTION

The invented OP Varnish comprises a solution of colloidal Silica complex emulsion mixed with casein solution at a specific ratio, and can be used on paper by means of immersing and spraying after being diluted with water. However the invented OP Varnish is used to mainly coated paper surface and printed paper surface by the conventional means of three-roll coater and flexographic coater for paper packages, and means of gravure printing or flexographic printing for corrugated cardboards.

DETAILED DESCRIPTION OF THE INVENTION

The colloidal silica complex emulsion applicable for the invention must have enough slip-resistance capacity in the dried film as well as gloss, and heat-resistance after being coated paper packages. The colloidal silica complex emulsion applicable for this purpose are acryl emulsion and styrene emulsion which contain colloidal silica 30% by weight or non-volatile material 40 - 45% by weight, and a viscosity under 100 CPS. They are Boncoat DV759, DV767, DV823 (manufactured by DIC), Movinyl 8000, 8010, 8020, 8030 (manufactured by Hoechst Synthetic Co.) for example.

However, colloidal silica complex emulsion (called complex emulsion hereafter) has low viscosity under 100 CPS, and lacks in printability, and can not wet the surface of oil base ink because of its repellency, even if the surface of oil base ink is coated by bar-coater.

The inventors checked co-solvency of many synthetic resins such as acryl resin modified polymerization or Tg, monomer constitution, styrene acryl resin, rosin maleic acid resin, styrene maleic resin, polyvinyl acetate resin, in order to give the printability to the complex emulsion. Almost all resins are not co-solvency and even if there is a co-solvency resin, it could not produce slip-resistance capacity to be needed.

The inventors tried to increase the viscosity of the complex emulsion by use of thickener, and the addition of the thickener ended only in adjustment of false viscosity and they could not transfer the adequate OP Varnish onto the surface of paper by roll-coater and flexographic printing, and could not store the product keeping the uniform quality.

The inventors have found that casein solution is the most suitable one among many resins as an effective ingredient to give printability to the complex emulsion. Casein is polyamide-like protein condensation product, and high polymer that many amino acids are linked in a long chain by acid amide connection CO-NH-.

The invention is applied not only to casein itself, but also to alkali solution that has polyamide-like protein condensation product as a main material, since it produces the same effect as casein does.

As everyone knows, casein is a natural protein from milk, and it soluble in alkali solution adding ammonia solution. The viscosity of casein solution varies according to casein content. What is generally used is a solution containing casein 10 - 30% by weight. A solution of casein content less than 10% is too low in viscosity for use, while a solution of casein content over that 30% by weight is too high in viscosity and lacks liquidity. Table-1 indicates the viscosity variation of solid casein 20% solution in the complex emulsion.

Table - 1

| Mixture | 1 | 2 | 3 | 4 | 5 | 6 | 7 | 8 | 9 | 10 |
|---|---|---|---|---|---|---|---|---|---|---|
| E % b.w. | 100 | 99 | 97 | 90 | 80 | 60 | 40 | 20 | 10 | 0 |
| C % b.w. | 0 | 1 | 3 | 10 | 20 | 40 | 60 | 80 | 90 | 100 |
| Viscosity | 8 | 26 | 284 | 872 | 5362 | 9960 | 3540 | 294 | 183 | 210 |

※ E indicates complex particla emulsion, C indicates casein 20% solution, Viscosity indicates CPS at a temperature of 28℃.

Table - 2

| Mixture | 1 | 2 | 3 | 4 | 5 | 6 | 7 | 8 | 9 | 10 |
|---|---|---|---|---|---|---|---|---|---|---|
| E % b.w. | 100 | 99 | 97 | 90 | 80 | 60 | 40 | 20 | 10 | 0 |
| C % b.w. | 0 | 1 | 3 | 10 | 20 | 40 | 60 | 80 | 90 | 100 |
| Friction | 47 | 47 | 48 | 49 | 46 | 41 | 37 | 18 | 18 | 18 |

※ Friction indicates friction angle.

Table - 3

| Mixture | 1 | 2 | 3 | 4 | 5 | 6 | 7 | 8 | 9 | 10 |
|---|---|---|---|---|---|---|---|---|---|---|
| E % b.w. | 100 | 99 | 97 | 90 | 80 | 60 | 40 | 20 | 10 | 0 |
| C % b.w. | 0 | 1 | 3 | 10 | 20 | 40 | 60 | 80 | 90 | 100 |
| Friction | - | 59 | 60 | 61 | 59 | 54 | 45 | 40 | 34 | 30 |

※ Friction indicates friction angle.

You will see from the Table-1 that it is possible for us to mix the complex emulsion with the casein solution at an optional ratio, and that the viscosity of the mixtures is freely adjustable according to the mixing ratio of casein solution. The solution viscosity for printing is between 50 CPS and 500 CPS depending on a printing press. Slip-resistance capacity required is unobtainable with OP Varnish at a viscosity under 50 CPS, since the quantity of varnish to be transferred onto paper is insufficient. When the viscosity is over 500 CPS, the quantity of varnish to be transferred onto paper oncrease. But some troubles such as foaming and insufficient dry will occur on coating work.

The desirable viscosity for flexographic printing is between 100 CPS and 300 CPS. Gravure printing can be applied with OP Varnish at a viscosity under 100 CPS. Three-Roll coater required OP Varnish at the same viscosity as that for flexographic printing. Coating onto the ink film of oil base printing ink with the complex emulsion only is impossible because of the repellency of the oil base ink. The invention has made that coating onto the ink film possible by mixing the complex emulsion with casein solution by more than 1% by weight. The slip-resistance capacity of the slip-resistance OP Varnish by the invention varies according as the mixing quantity of casein solution.

The Table-2 indicates the slip-resistance variation when the complex emulsion is mixed with casein content 20% solution. It is desirable to use casein solution at lower ratio in order to obtain better slip-resistance capacity. Slip-resistance capacity is adjustable by increasing or decreasing the mixing ratio of casein solution. When the mixing ratio of casein solution is zero, the viscosity of the complex emulsion is 8 CPS, which is unsuitable for printing by Three-Roll coater and flexographic printing press. As the mixing retio of casein solution increases, the slip-resistance capacity decreases. On coating onto the jute liner of corrugated cardboards, when the mixing ratio of casein solution is over 80% by weight, the friction angle is under 30 degree.

Table-2

Friction angle is a still coefficient of friction (indicating the angle when a test material starts to slide). The test material is jute liner (200g/m$^2$ manufactured by Jujyo Paper Mabufacturing Co. Ltd) coated by No. 4 Bar Coater. Used after being treated at a temperature of 20 $^\circ$C, and a humidity of 60% for 24 hours. The friction angle indicates the value measured at the fifth time after measurement of surface are repeated five times.

The friction angle is influenced by the material to be coated. Since the jute liner for corrugated cardboards is rough on its surface and absorbs OP Varnish very much, its friction angle is low. The Table-2 indicates the friction angle when the jute liner is coated by about 8 micron wet quantity of OP Varnish by No. 4 Bar Coater. Since paper packages printed are used with coated paper and oil base printing ink, OP Varnish coated onto the surface of the paper packages is very small is quantity to be penetrated into paper. The Table-3 indicates the friction angle when the aforesaid complex emulsion is coated on the printed ink film of oil base printing ink.

Table-3

The measurement method of the friction angle is the same as that in the Table-2. The test material is what was coated with OP Varnish by No. 4 Bar Coater after coated paper "Z-Star" (manufactured by Daishowa Paer Manufacturing Co., Ltd) was printed with oil base printing ink CARTON EPOCH BLACK (manufactured by The Osaka Printing Ink Mfg., Co., Ltd) and dried up.

On manufacturing slip-resistance OP Varnish that the invention requires, the aforesaid colloidal silica complex emulsion and casein solution are mixed at a ratio of 99%-10% to 1% - 90% by weight. Namely casein content 20% solution is what is mixed with solid casein by the range of 0.2% - 18%. When the casein solution is less than 1% in the colloidal complex emulsion, printability is unobtainable. When the casein solution is more than 90%, slip-resistance capacity required is unobtainable.

The slip-resistance OP Varnish relating to the invention are mainly made from the above mentioned two ingredients. The slip-resistance OP Varnish can be added some additives such as water or solvent mixable with water, small amount of anti-foaming agent, agent to form film, wax, surfactant in order to adjust its viscosity and a degree of drying.

The invention features that colloidal silica complex emulsion has been mixed with casein solution. The viscosity can be freely adjusted by the use of casein solution in the OP Varnish.

The invention has made water base OP Varnish printable and / or coatable by the conventional printing presses for paper packages and corrugated cardboards. Three-Roll coaters, flexographic printing presses, and gravure printing presses. Also the use of casein solution has made the complex emulsion coatable and printable on the printed surface by oil base printing ink, and it has produced a glossy slip-resistance OP Varnish.

The OP Varnish according to the invention is a new type slip-resistance water base OP Varnish that maintains gloss and is excellent in heat-resistance and blocking-resistance, since silica powder, adhesive resin and low molecular weight resin are excluded from the OP Varnish.

Followings are the concrete explanation from the actual operation. The invention is not confined to the operation.

Example of operation

According to the formula in the Table-4, colloidal silica complex emulsion and casein solution were mixed by a conventional mixer, and were adjusted by the OP Varnish in the example of operation 1 through 6 and the OP Varnish in the example of comparison 1 through 4. The figures in the examples of operation and comparison indicate the ratio by weight.

Table - 4

| Water base OP Varnish | 1 | 2 | 3 | 4 | 5 | 6 |
|---|---|---|---|---|---|---|
| Emulsion (-1) | 97 | 80 | 60 | 20 | - | - |
| Emulsion (-2) | - | - | - | - | 80 | 20 |
| Casein solution (-3) | 3 | 20 | 40 | 80 | 20 | 80 |
| Water | - | 8 | 12 | - | 8 | - |
| IPA (-4) | - | 4 | 6 | - | 4 | - |
| KM70 (-5) | 0.5 | 0.5 | 0.5 | 0.5 | 0.5 | 0.5 |
| Viscosity (-6) | 284 | 500 | 430 | 294 | 470 | 310 |

Emulsion (-1) indicates Movinyl 8020 manufactured by Hoechst Synthetic Co.
Emulsion (-2) indicates Boncoat DV759 manufactured by DIC.
Casein solution (-3) indicatesa mixture of 20g of casein, 2g of ammonia content 25% solution, and 78g of water.

5

IPA (-4) indicates Isopropyl Alcohol.

KM70 (-5) indicates Silicone Emulsion anti-foaming agent manufactured by Shinetsu Chemical Industries Co.

Viscosity (-6) indicates CPS at a temperature of 28 °C by B-type Viscometer.

Example of comparison 1

(In case of use of general purpose styrene acryl emulsion instead of colloidal silica complex emulsion)

| | |
|---|---|
| Johncryl 74J (-7) | 80 |
| Casein solution (-3) | 20 |
| Water | 6 |
| KM70 (-5) | 0.5 |
| | 106.5 |

Viscosity 520 CPS, 28°C

Johncryl 74J (-7) indicates acryl emulsion manufactured by Johnson Polymer Co.

Example of comparison 2

(In case of use of what adhesive synthetic resin and non-tacky resin are mixed)

| | |
|---|---|
| Sumika flex 400 (-8) | 70 |
| Johncryl 62 (-9) | 30 |
| Water | 5 |
| Anti-foaming agent | 1 |
| | 106 |

Viscosity 420 CPS, 28°C

Sumika flex 400 (-8) indicates ethylene vinylacetate emulsion manufactured by Sumitomo Chemical Industries Co.

Johncryl 62 (-9) indicates styrene acryl resin 35% solution manufactured by Johnson Polymer Co.

Example of comparison 3

(In case of a mixture of soft resin, extender, and silica micro powder)

|  |  |
|---|---|
| Ema-Poly B 3X (-10) | 40 |
| Extender dispersion (-11) | 42 |
| Silton R-2 (-12) | 12 |
| Water | 6 |
| Anti-foaming agent | 0.5 |
|  | 100.5 |

Viscosity 300 CPS, 28°C

Ema-Poly B 3X (-10) indicates soft acryl emulsion manufactured by Gifu Shellac Manufacturing Co.
Extender dispersion (-11) indicates what the following ingredients are mixed and dispersed through Sand-Mill.

|  |  |
|---|---|
| Barium sulfate | 30 |
| Calcium carbonate | 30 |
| Johncryl 62 (-9) | 30 |
| Ammonia solution | 3 |
| Water | 6 |
| Anti-foaming agent | 1 |
|  | 100 |

Silton R-2 (-12) indicates silica micro powder manufactured by Mizusawa Chemical Industries Co.

Example of comparison 4

(In case of the use of foaming particles)

|  |  |
|---|---|
| Ema-Poly BG-221 (-13) | 64 |
| Silton R-2 (-12) | 20 |
| Micro sphere F30 (-14) | 2 |
| Water | 14 |
| Anti-foaming agent | 0.5 |
|  | 100.5 |

Viscosity 360 CPS, 28°C

Ema-Poly BG-221 (-13) indicates styrene acryl emulsion manufactured by Gifu Shellac Manufacturing Co.
Micro sphere F30 (-14) indicates micro-cupsule that swells by heat manufactured by Matsumoto Oils and Fat, Pharmaceutical Co.

The measurement of the friction angle was made through the inclination method by friction angle tester corrugated jute liner (200g/m$^2$ manufactured by Jujyo Paper Mfg. Co.) was coated on its full surface with the respective OP Varnish which was obtained from the example of operation 1 through 6 and the example of comparison 1 through 4, and was made the humidity adjustment at a temperature of 20°C, a humidity of 60% for a day. The value of the friction angle is what was obtained fifth time after slipping test was repeated five times. Liners and printed matters without coating of OP Varnish were assessed as blank. Blocking-resistance was assessed under the following condition.

For corrugated liner = Liners coated with OP Varnish were put together on surface to surface, and were pressed at a pressure of 500g/cm$^2$ at a temperature of 50°C, a humidity of 90%.

For oil base printing ink = Liners printed with oil base printing ink and coated with OP Varnish were put together on surface to surface, and were pressed at a pressure of 250g/cm$^2$ at a temperature of 45°C, a humidity of 90% for a day.

The gloss value was measured by gloss meter.

The heat-resistance was assessed by the condition of the coated surface after the surface coated with OP Varnish was rubbed strongly for 10 seconds by an iron with a temperature of 180°C on its surface. Table-5 indicates a result on OP Varnish coated on corrugated liner and Table-6 is a result on OP Varnish coated on ink film of oil base printing ink.

## Table-5

| | Example of operation | | | | | | |
|---|---|---|---|---|---|---|---|
| | 1 | 2 | 3 | 4 | 5 | 6 | Blank |
| Friction angle | 48 | 44 | 40 | 18 | 44 | 18 | 21 |
| Gloss value | 16 | 11 | 9 | 9 | 11 | 9 | 3 |
| Blocking-resistance | ○ | ○ | ○ | ○ | ○ | ○ | − |
| Heat-resistance | ○ | ○ | ○ | ○ | ○ | ○ | − |

| | Example of comparison | | | |
|---|---|---|---|---|
| | 1 | 2 | 3 | 4 |
| Friction angle | 28 | 45 | 43 | 40 |
| Gloss value | 12 | 5 | 2 | 2 |
| Blocking-resistance | △ | △ | ○ | ○ |
| Heat-resistance | × | ○ | × | × |

Assessed criteria: ○ indicates good, △ inferior,

× poor

In the example of comparison 4, the material was heated at a temperature of 120°C for 5 seconds after being coated.

Table-6

Example of operation

| | 1 | 2 | 3 | 4 | 5 | 6 | Blank |
|---|---|---|---|---|---|---|---|
| Friction angle | 60 | 57 | 52 | 40 | 56 | 40 | 19 |
| Gloss value | 72 | 62 | 60 | 68 | 62 | 70 | 50 |
| Blocking-resistance | ○ | ○ | ○ | ○ | ○ | ○ | ○ |
| Heat-resistance | ○ | ○ | ○ | ○ | ○ | ○ | ○ |

Example of comparison

| | 1 | 2 | 3 | 4 |
|---|---|---|---|---|
| Friction angle | 30 | 48 | 46 | 41 |
| Gloss value | 52 | 19 | 2 | 4 |
| Blocking-resistance | △ | △ | △ | ○ |
| Heat-resistance | × | △ | × | × |

Oil base printing ink means the printed and dried ink on coated paper by RI tester (Oil base ink spreader) (Coated paper is Z Star manufactured by Daishowa Paper Manufacturing Co. and oil base printing ink is Carton Epoch Blank manufactured by The Osaka Printing Ink Mfg. Co., Ltd.)

Effect of the invention

As shown in the above example of operation, the invented slip-resistance OP Varnish is a new type water base OP Varnish, which is superior in slip-resistance effect, gloss, blocking-resistance and heat-resistance compared with the conventional OP Varnishes, and then makes coating work efficient because the same printing presses for paper packages, corrugated cardboards, paper bags are available, since the viscosity can be freely adjusted.

**Claims**

1. Slip-resistance water base overcoat varnish wherein casein solution 0.2% - 18% (solid casein by weight) is mixed in the colloidal silica complex emulsion.

9